# EUROPEAN PATENT SPECIFICATION

(11) **EP 1 146 684 B1**
(45) Date of publication and mention of the grant of the patent: **16.11.2005**
(21) Application number: 01303244.6
(22) Date of filing: 05.04.2001
(51) Int. Cl.: H04L 9/00

(54) **Limited printing of electronically transmitted information**
Begrenztes Drucken einer elektronisch übertragenen Information
Impression limitée d'une information transmise de manière électronique

(30) Priority: 10.04.2000 US 546059
(43) Date of publication of application: 17.10.2001
(73) Proprietor: Hewlett-Packard Company, Palo Alto, CA 94304 (US)
(72) Inventor: Taylor, Keith M., Corvallis, OR 97330 (US); Miller, Robert M., Corvallis, OR 97330 (US); Kerr M., John, Albany, OR 97321 (US)
(74) Representative: Carpmaels & Ransford

(56) References cited:
- EP-A- 0 653 695
- EP-A- 0 665 486
- WO-A-98/11690
- US-A- 5 633 932

## Description

### BACKGROUND

The present invention concerns data transactions made over networking systems and pertains particularly to the limited printing of electronically transmitted information.

Electronic transfer of information has greatly increased the simplicity and convenience of information distribution. While in many instances this is a great benefit, it can also introduce difficulties.

For example, sometimes it is desired to limit the electronic dissemination of certain information. However, once the information is made available in electronic form, it is very difficult to prevent further distribution.

Likewise, delivery of information via the Internet often is inadequately protected from unlicensed copying. For instance, if an architect wishes to deliver a set of plans to a customer via an Internet connection, the architect may wish that only paid-for copies of the plans are made. Furthermore, the architect may wish for some protection against reproduction of the plans in an electronic format, e.g., prevention of a recipient from posting the plans on a web site. Likewise, when research data is purchased, the provider of the information may wish to provide that the research data is delivered to the recipient with the correct number of copies and without the ability to re-circulate the data via electronic means.

It would be advantageous, therefore, to allow information to be distributed electronically, yet to have some limitations that prevent additional electronic distribution.

EP-A-0665486 describes a method of protecting electronically published documents in which requests for documents are received from a plurality of users, together with respective unique user identification. The requests are authenticated, and uniquely encoded, compressed and encrypted documents are created for each authenticated request, and subsequently uncompressed and decrypted using secret keys provided by the authenticated request user.

### SUMMARY OF THE INVENTION

In accordance with a first aspect of the present invention there is provided a method of providing for limited printing of a source document as defined in claim 1.

In accordance with a second aspect of the present invention there is provided a limited printed document as defined in claim 4.

For protection, the installation identifier can be encrypted until it is used.

Upon completion of printing, the limited print document, the installation identifier and/or a decryption key used to decrypt the encrypted document are destroyed.

The user purchases rights to print the source document. In various embodiments of the present invention, the limited print document and/or a decryption key are not forwarded to the user until the purchase has been completed.

In one embodiment of the invention, upon completion of printing, the user is asked to confirm printing was performed. Upon receipt of confirmation from the user, the limited print document is destroyed.

In another embodiment of the invention, the source document is printed in sections. Upon completion of printing, each section is destroyed. Before destruction of a section, a user can be requested to confirm printing the section was completed.

The present invention provides for generation of a limited number of copies of a source document and provides protection against misuse of the electronic form of a source document.

### BRIEF DESCRIPTION OF THE DRAWINGS

Figure 1 is a simplified block diagram that illustrates the construction of a limited print document in accordance with a preferred embodiment of the present invention.
Figure 2 is a simplified block diagram that illustrates the download and installation of a limited print document in accordance with a preferred embodiment of the present invention.
Figure 3 is a simplified block diagram that illustrates the purchase of printing rights of a limited print document in accordance with a preferred embodiment of the present invention.
Figure 4 is a simplified block diagram that illustrates the beginning of the process to print a limited print document in accordance with a preferred embodiment of the present invention.
Figure 5 is a simplified block diagram that illustrates the completion of the process to print a limited print document in accordance with a preferred embodiment of the present invention.

### DESCRIPTION OF THE PREFERRED EMBODIMENT

Limited print documents are electronically encapsulated documents that can be printed only a limited number of times (e.g., once). Limited print documents allow for the delivery of valuable documents electronically and at the same time prevent the recipient (user) from easily printing out multiple copies of the document or redistributing the electronic form of the document to others. Limited print documents can be used to deliver documents for payment or for delivery of documents based on digital signature.

A limited print document is encapsulated in a program file. On a personal computer (PC), the limited print document is delivered, for example, as an executable .exe file. The source document inside the limited print document is encrypted so that the source document can not be easily extracted by taking apart the limited printed document.

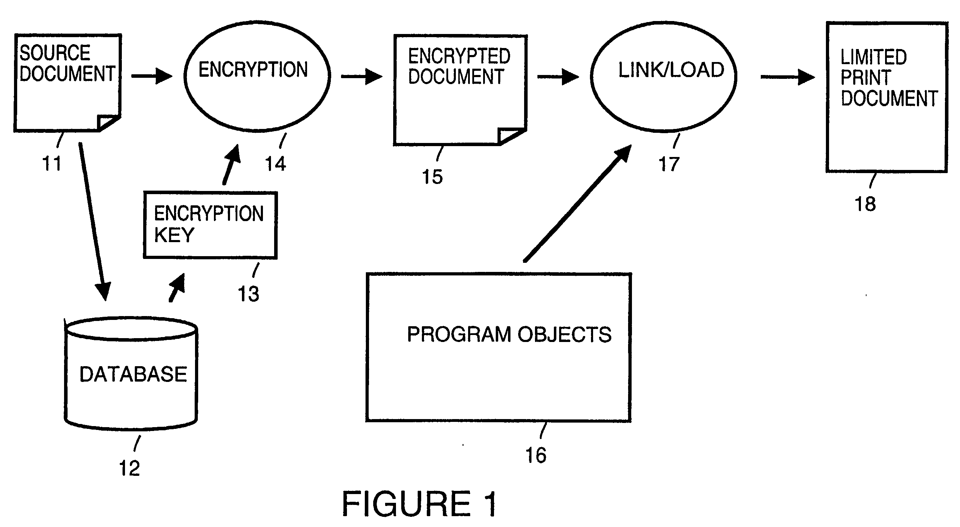

Figure 1 is a simplified block diagram that illustrates the construction of a limited print document 18. The process starts with a source document 11. For example, source document 11 is authored with a standard document preparing tool (e.g. Microsoft Word available from Microsoft Corporation, Adobe Photoshop available from Adobe Systems, Inc., Quark Express or another of many available applications) and stored, for example, in a common document transfer format such as Adobe Portable Document Format (PDF), developed by Adobe Systems, Inc. Alternatively, source document 11 may be stored in any format which is printable.

Source document 11 is encrypted using an encryption tool 14. For example, encryption tool 14 utilizes the Data Encryption Standard (DES) or the International Data Encryption Algorithm (IDEA). In a database 12, the association of an encryption key 13 used for the encryption and source document 11 is stored. Encryption tool 14 produces an encrypted document 15.

A program linker/loader 17 links encrypted document 15 with program objects 16 to produce limited print document 18. Program objects 16 are, for example, ".obj" files that perform the installation, decryption, and printing of limited print document 18 on an end user system. Program linker/loader 17 is, for example, a standard linker/loader such as that available in Microsoft Visual C++ 6.0. Limited print document 18 thus contains the program objects 16 and the contents of encrypted document 15.

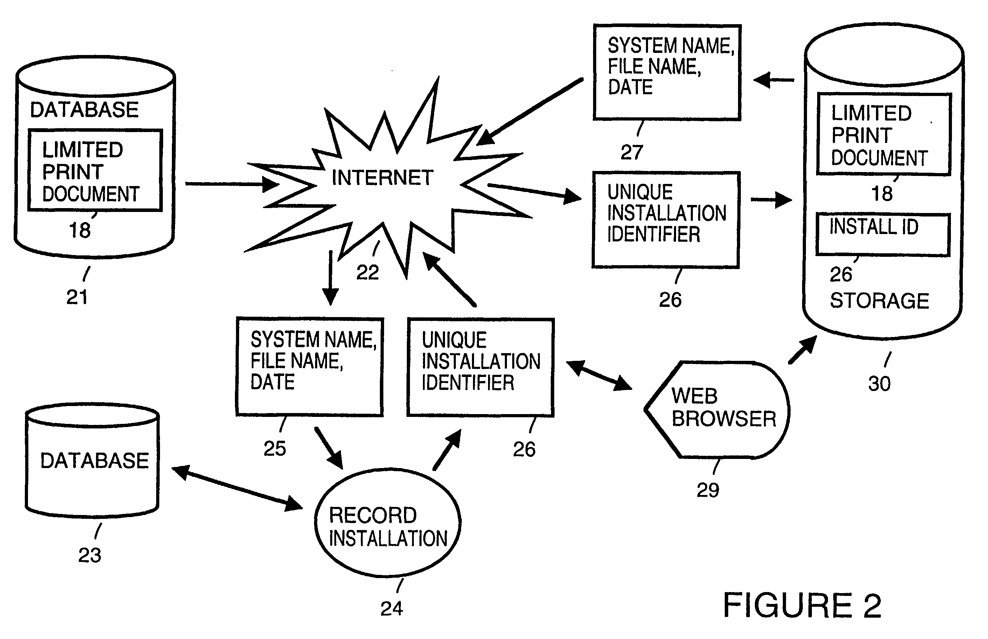

Figure 2 is a simplified block diagram that illustrates the download and installation of limited print document 18 by a user (buyer, document consumer). The user browses to the document provider's web site and selects a document for download. For example, the user selects limited print document 18 from provider database 21. The user downloads limited print document 18 using normal mechanisms within a web browser 29. Installation software within limited print document 18 is run in order to record particulars 25 of the document download. Particulars 25 include system name, file name, date and time, and so on. The provider performs a record installation 24 of particulars 25 in a database 23. A unique installation identifier 26 is recorded in database 23 along with particulars 25. Unique installation identifier 26 is also sent to the user where installation identifier 26 is sorted along with limited print document 18 in a user storage area 30.

The installation software can be run manually by the user, or can execute automatically upon download via Multipurpose Internet Mail Extensions (MIME) types in web browser 29. Alternatively, running of the installation software can be deferred until just before printing rights are purchased. Automating the installation with the use of MIME types requires web browser 29 to be configured to run pre-installed software when it encounters a limited print document identified by a new "limited print document" MIME type.

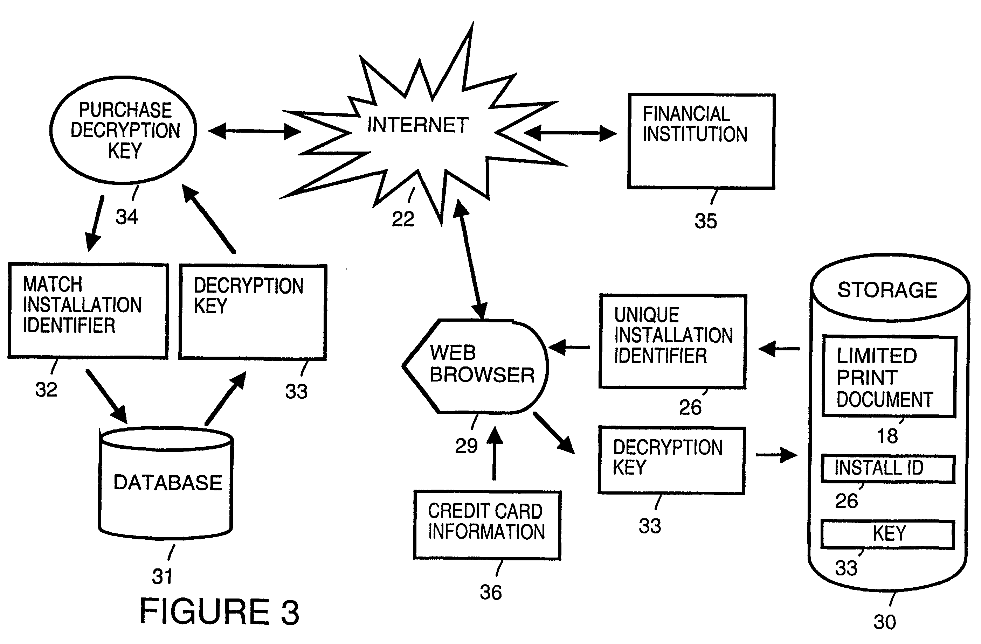

Figure 3 is a simplified block diagram that illustrates the purchase of printing rights of limited print document 18. During purchase, the user supplies to the provider unique installation identifier 26 along with, for example, credit card information 36, which provider can verify, for example, using a financial institution 35, accessed via the internet 22.

Through a purchase decryption key process 34, installation identifier match 32 is performed to confirm a corresponding installation identifier is stored in database 31. Once payment has been confirmed and a match has been made, a decryption key 33 is forwarded through internet 22 to the user and stored in storage 30 along with install identification 26 and limited print document 18.

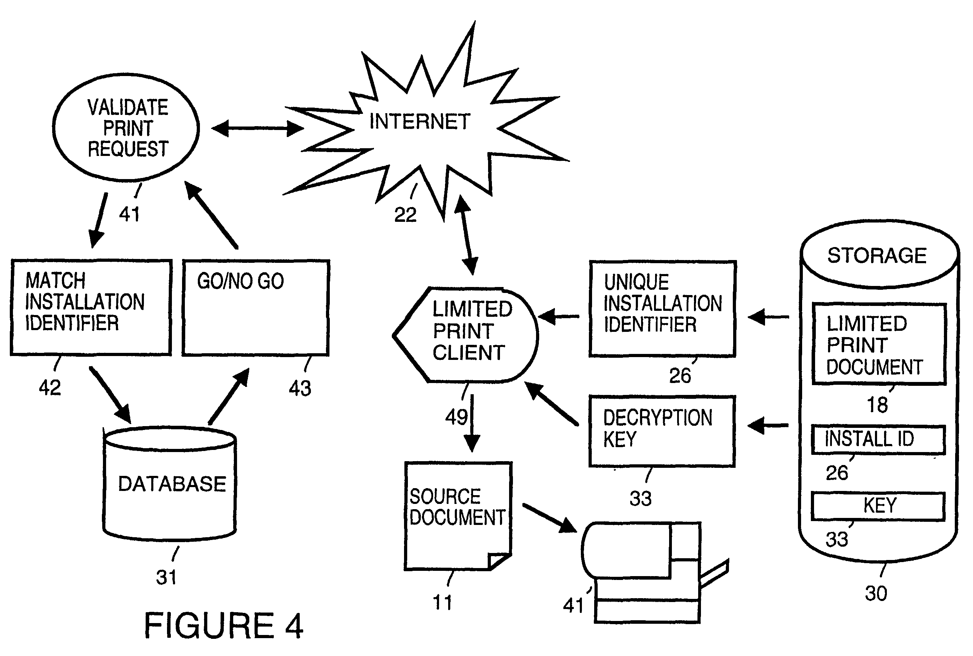

Figure 4 is a simplified block diagram that illustrates the beginning of the process to print limited print document 18. Limited print document 18 contains program objects (e.g., .obj files) which perform printing functions. When a user executes limited print document 18, limited print client 49 (a running version of the program objects) from within limited print document is run. Before performing any printing, limited print client 49 checks the validity of the installation using unique installation identification 26. This is done, for example, by sending unique installation identification 26 through the internet 22 to a validate print request process 41 within the provider domain. Installation identifier match 42 is performed to confirm a corresponding installation identifier is stored in database 31. Depending upon the success of the match, a return message 43 indicating "Go" or "No Go" indicates whether the print may be performed. When the "Go" message has been received, limited print client 49 uses decryption key 33 to decrypt the data contents of limited print document 18 to recover source document 11. Limited print client 49 then prints source document 11 on a printer that is part of or attached to the user computer system.

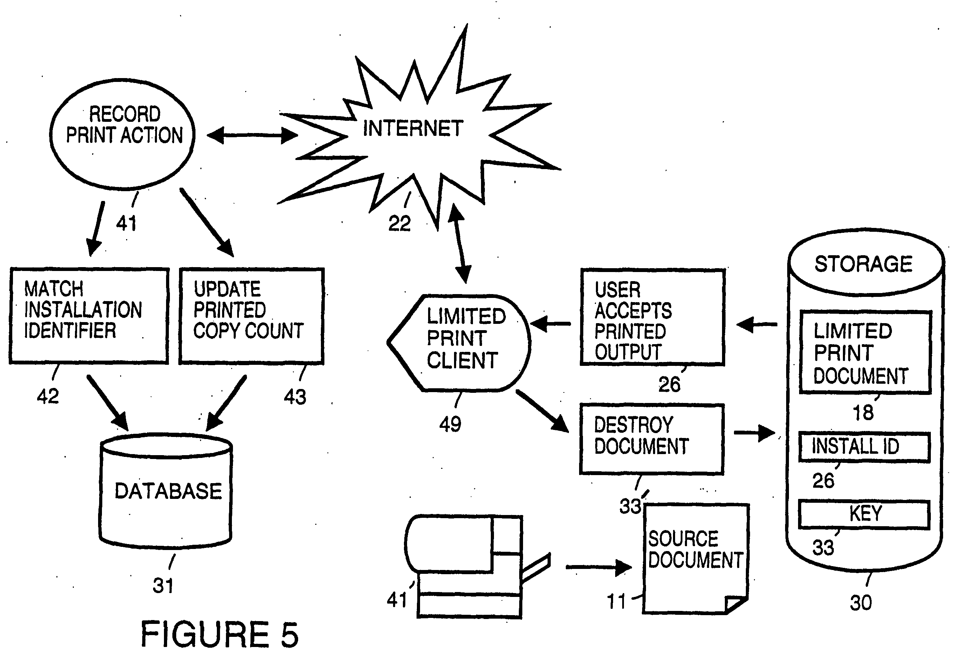

Figure 5 is a simplified block diagram that illustrates the completion of the process to print limited print document 18. After printing source document 11, limited print client 49 waits for the user to acknowledge that a good copy of source document 11 was printed. The user gives the acknowledgement through use of a dialog window or other familiar user interface mechanism on the user computer system. Alternatively, the acknowledgement may be generated by limited print client 49 without input from the user.

The acknowledgement that a good copy of document 11 was printed is forwarded to a record print action process 41 on the provider's system. Installation identifier match 42 is performed to locate a corresponding installation identifier stored in database 31. An update printed copy count process 43 is performed to indicate within database 31 that the print has been performed.

Once the user accepts the printed version of source document 11 (or alternatively, limited print client 49 determines on its own that source document 11 has been satisfactorily printed), limited print client 49 takes action to insure that another print cannot happen. For example, destroy document process 33' destroys limited print document 18 and decryption key 33. Alternatively, depending on the operating system run by the user's computer system, destroy document process 33' can damage any combination of limited print document file 18, installation identification 26 or decryption key 33.

If source document 11 is more than a predetermined number of pages (e.g., greater than 20 pages), then verification of the printing of source document 11 is done in smaller sections, such as chapters. As the user accepts the printed output of each section, limited print client 49 damages the accepted section so that it cannot be printed again.

If the printing of a section fails, then that section is reprinted. The numbers of reprints of a section is limited. Once the user accepts all the sections, limited print client 49 deletes limited print document 18 and decryption key 33.

While the above describes one embodiment of the invention, the invention may be embodied in other specific forms

For example, in the above-described embodiment, a working internet connection at the time of printing is assumed. Such an embodiment provides for heightened security and allows information on the print to be easily tracked by the provider.

In an alternative embodiment, for example, a user downloads limited print document 18 and receives an installation identification that has been encrypted. Upon purchasing decryption key 33 the user can print while off-line. Limited print client 49 uses decryption key 33 to decrypt the installation identification information and compares that with the current user system. A match validates the right to print.

In another alternative embodiment, limited print document 18 is not downloaded from the provider's web site until after the purchase of printing rights of limited print document 18. Once the printing rights of limited print document 18 are purchased, both limited print document 18 and decryption key 33 are downloaded.

When run, limited print client 49 decrypts the data portion of limited print document 18 to extract source document 18 and streams source document 18 to printer 41. Once successful completion of the printing of source document 18 is confirmed (either by monitoring done by limited print client 49 or feedback from the user), limited print client 49 sends an acknowledgement back to the provider and destroys limited print document 18 and decryption key 33. Any error in printing is handled by further interaction between the provider and the user,

In yet another embodiment of the present invention, limited encryption key 33 is transferred to storage 30 but limited print document 18 is not transferred to storage 30. Rather, upon confirmation of payment, the user can utilize encryption key 33 to have source document 11 decrypted and transferred directly from the provider web site to printer 41 via a secure Hypertext Transfer Protocol (http) connection, Secure Sockets Layer (SSL) connection or an email client acting upon the behalf of printer 41. Upon successful printing, the provider is notified. Unsuccessful printing requires further interaction between the provider and user. For example, in this case, encryption key 33 allows the user to access source document 11 only once. When multiple printed copies are required, additional encryption keys must be purchased.

The foregoing discussion discloses and describes merely exemplary methods and embodiments of the present invention. As will be understood by those familiar with the art, the invention may be embodied in other specific forms. Accordingly, the disclosure of the present invention is intended to be illustrative, but not limiting, of the scope of the invention, which is set forth in the following claims.

## Claims

1. A method for providing for limited printing of a source document (11), the method comprising the following steps:
(a) encrypting the source document (11) to produce an encrypted document (15);
(b) combining the encrypted document (15) with program objects (16) to form a limited print document (18);
(c) receiving the limited print document (18) by a user;
(d) running the program objects (16) upon the user executing the limited print document (18), the program objects (16) overseeing decryption of the encrypted document (15) and printing the source document (11) on a printer (41); and
upon running the program objects (16), performing the following substeps:
(d.1) using an installation identifier (26) to confirm permission to print the source document (11), including the following substeps:
forwarding the installation identifier (26) through the internet (22) to a document provider,
checking the installation identifier (26) by the document provider against information stored in a database (31), and
forwarding by the document provider to the program objects (16) an indication as to whether permission is confirmed; and,
(d.2) upon confirmation of permission to print the source document (11), performing the following substeps:
decrypting the encrypted document (15),
printing the source document (11) on the printer (41), and upon completion of printing, destroying the limited print document (18).

2. A method as in claim 1 wherein in step (c) includes the following substeps:
(c.1) purchasing, by the user, rights to print the source document (11).

3. A method as in claim 2 further including:
(c.2) receiving, by the user, a decryption key to be used for decrypting the encrypted document (15) in response to the step of the user purchasing rights to print the source document (11).

4. A limited print document (18) comprising:
an encrypted document (15) that when decrypted is a source document (11); and,
program objects (16) which when run on a computing system oversee decryption of the encrypted document (15) and printing the source document (11) on a printer (41);
wherein the program objects (16) use an installation identifier (26) to confirm permission to print the source document (11), and upon confirmation of permission to print the source document (11), decrypting the encrypted document (15), printing the source document (11) on the printer (41), and upon completion of printing the program objects (16), destroying the limited print document (18); and
wherein the program objects (16) use an installation identifier (26) to confirm permission to print the source document (11), forwarding the installation identifier (26) through the internet (22) to a document provider to determine whether there exists permission to print the source document (11) on the printer (41).

5. A limited print document (18) as in claim 4 wherein the program objects (16) use a decryption key to be used for decrypting the encrypted document (15), the decryption key being received in response to purchasing of rights to print the source document (11).

## Patentansprüche

1. Ein Verfahren zum Schaffen eines beschränkten Druckens eines Quelldokuments (11), wobei das Verfahren folgende Schritte aufweist:
(a) Verschlüsseln des Quelldokuments (11), um ein verschlüsseltes Dokument (15) zu erzeugen;
(b) Kombinieren des verschlüsselten Dokuments (15) mit Programmobjekten (16), um ein beschränktes Druckdokument (18) zu bilden;
(c) Empfangen des beschränkten Druckdokuments (18) durch einen Benutzer;
(d) Abspielen des Programmobjekts (16) nach dem Ausführen des beschränkten Druckdokuments (18) durch den Benutzer, wobei die Programmobjekte (16) die Entschlüsselung des verschlüsselten Dokuments (15) und das Drucken des Quelldokuments (11) auf einem Drucker (41) überwachen; und
nach dem Abspielen der Programmobjekte (16), Ausführen der nachfolgenden Teilschritte:
(d.1) Verwenden eines Installationsidentifizierers (26), um die Erlaubnis zu bestätigen, das Quelledokument (11) zu drucken, was die nachfolgenden Teilschritte umfasst:
Weiterleiten des Installationsidentifizierers (26) durch das Internet (22) zu einem Dokumentanbieter,
Prüfen des Installationsidentifizierers (26) durch den Dokumentanbieter gegen Informationen, die in einer Datenbank (31) gespeichert sind; und
Weiterleiten, durch den Dokumentanbieter zu den Programmobjekten (16), einer Anzeige darüber, ob die Erlaubnis bestätigt wird; und
(d.2) nach der Bestätigung der Erlaubnis zum Drucken des Quelldokuments (11), Ausführen der nachfolgenden Teilschritte:
Entschlüsseln des verschlüsselten Dokuments (15),
Drucken des Quelldokuments (11) auf dem Drucker (41), und nach der Fertigstellung des Druckens, Zerstören des beschränkten Druckdokuments (18).

2. Ein Verfahren gemäß Anspruch 1, bei dem Schritt (c) die nachfolgenden Teilschritte umfasst:
(c.1) Kaufen, durch den Benutzer, von Rechten zum Drucken des Quelldokuments (11).

3. Ein Verfahren gemäß Anspruch 2, das ferner folgendes umfasst:
(c.2) Empfangen, durch den Benutzer, eines Entschlüsselungsschlüssels, der zum Entschlüsseln des verschlüsselten Dokuments (15) verwendet werden soll, ansprechend auf den Schritt des Kaufens von Rechten zum Drucken des Quelldokuments (11) durch den Benutzer.

4. Ein beschränktes Druckdokument (18), das folgende Merkmale aufweist:
ein verschlüsseltes Dokument (15), das, wenn es entschlüsselt wird, ein Quelldokument (11) ist; und
Programmobjekte (16), die, wenn sie auf einem Rechensystem abgespielt werden, eine Entschlüsselung des verschlüsselten Dokuments (15) und ein Drucken des Quelldokuments (11) auf einem Drucker (41) überwachen;
wobei die Programmobjekte (16) einen Installationsidentifizierer (26) verwenden, um eine Erlaubnis zu bestätigen, das Quelldokument (11) zu drucken, und auf die Bestätigung der Erlaubnis zum Drucken des Quelldokuments (11) hin das verschlüsselte Dokument (15) entschlüsseln, das Quelldokument (11) auf dem Drucker (41) drucken und nach der Fertigstellung des Druckens der Programmobjekte (16) das beschränkte Druckdokument (18) zerstören; und
wobei die Programmobjekte (16) einen Installationsidentifizierer (26) verwenden, um die Erlaubnis zu bestätigen, das Quelledokument (11) zu drucken, wodurch der Installationsidentifizierer (26) durch das Internet (22) zu einem Dokumentanbieter weitergeleitet wird, um zu bestimmen, ob eine Erlaubnis existiert, das Quelldokument (11) auf dem Drucker (41) zu drucken.

5. Ein beschränktes Druckdokument (18) gemäß Anspruch 4, bei dem die Programmobjekte (16) einen Entschlüsselungsschlüssel verwenden, der zum Entschlüsseln des verschlüsselten Dokuments (15) verwendet werden soll, wobei der Entschlüsselungsschlüssel ansprechend auf das Kaufen von Rechten zum Drucken des Quelledokuments (11) empfangen wird.

## Revendications

1. Procédé permettant l'impression limitée d'un document source (11), le procédé comprenant les étapes suivantes :
(a) chiffrage du document source (11) afin de produire un document chiffré (15) ;
(b) combinaison du document chiffré (15) avec des objets de programme (16) afin de former un document à impression limitée (18) ;
(c) réception du document à impression limitée (18) par un utilisateur ;
(d) lancement des objets de programme (16) lorsque l'utilisateur exécute le document à impression limitée (18), lesdits objets de programme (16) supervisant le déchiffrage du document chiffré (15) et imprimant le document source (11) sur une imprimante (4-1) ; et,
lors du lancement des objets de programme (16), exécution des sous-étapes suivantes :
(d.1) utilisation d'un identifiant d'installation (26) pour confirmer l'autorisation d'imprimer le document source (11), comprenant les sous-étapes suivantes :
transmission de l'identifiant d'installation (26) par Internet (22) à un fournisseur de document,
contrôle de l'identifiant d'installation (26) par le fournisseur de document en fonction d'informations stockées dans une base de données (31), et
transmission par le fournisseur de document aux objets de programme (16) d'une indication de confirmation ou non de l'autorisation ; et,
(d.2) après la confirmation de l'autorisation d'imprimer le document source (11), exécution des sous-étapes suivantes :
déchiffrage du document chiffré (15),
impression du document source (11) sur l'imprimante (41) et, une fois l'impression terminée, destruction du document à impression limitée (18).

2. Précédé selon la revendication 1, dans laquelle l'étape (c) comprend les sous-étapes suivantes :
(c.1) achat par l'utilisateur de droits d'impression du document source (11).

3. Procédé selon la revendication 2, comprenant en plus :
(c.2) la réception par l'utilisateur d'une clé de déchiffrage destinée à être utilisée pour déchiffrer le document chiffré (15) en réponse à l'étape d'achat par l'utilisateur de droits d'impression du document source (11).

4. Document à impression limitée (18) comprenant :
un document chiffré (15) qui, lorsqu'il est déchiffré, est un document source (11) ; et,
des objets de programme (16) qui, lorsqu'ils sont lancés sur un système informatique, supervisent le déchiffrage du document chiffré (15) et l'impression du document source (11) sur une imprimante (41) ;
dans lequel les objets de programme (16) utilisent un identifiant d'installation (26) pour confirmer l'autorisation d'imprimer le document source (11) et, après la confirmation de l'autorisation d'imprimer le document source (11), pour déchiffrer le document chiffré (15), imprimer le document source (11) sur l'imprimante (41) et, une fois l'impression des objets de programme terminée (16), détruire le document à impression limitée (18) ; et
dans lequel les objets de programme (16) utilisent un identifiant d'installation (26) pour confirmer l'autorisation d'imprimer le document source (11), en transmettant l'identifiant d'installation (26) par Internet (22) à un fournisseur de document afin de déterminer s'il existe ou non une autorisation d'imprimer le document source (11) sur l'imprimante (41).

5. Document à impression limitée (18) selon la revendication 4, dans lequel les objets de programme (16) utilisent une clé de déchiffrage destinée à être utilisée pour déchiffrer le document chiffré (15), la clé de déchiffrage étant reçue en réponse à l'achat de droits d'impression du document source (11).
